# EUROPEAN PATENT APPLICATION

(11) **EP 2 881 598 A1**
(43) Date of publication of application: **10.06.2015**
(21) Application number: 13821049.7
(22) Date of filing: 08.11.2013
(51) Int. Cl.: F16B 7/02, F16B 7/06, F16M 11/26, G03B 17/56

(54) **QUICK-CONNECTION ANTI-LOOSENING DEVICE**

(30) Priority: 01.11.2013 CN 201310531597
(71) Applicant: Zhongshan Sirui Photographic Equipment Industry Co., Ltd., The Third Industrial District Wuguishan Town Zhongshan Guangdong 528458 (CN)
(72) Inventor: HU, Xiaoyun, Zhongshan, Guangdong 528458 (CN)
(74) Representative: Tischner, Oliver
(86) International application number: PCT/CN2013/086770
(87) International publication number: WO 2015/062121

(57) **Abstract**

The invention discloses a quick connection anti-loose apparatus, which comprises a first main rod, a second main rod and connection anti-loose devices, wherein the connection anti-loose devices include a first joint, a second joint, and a connecting structure knob slidably sleeved on the first joint or the second joint and restricted from slipping off from the lower end of the first joint or the upper end of the second joint; between opposite ends of the first joint and the second joint are provided anti-rotation structures which are combined with each other to prevent the two joints from rotating relative to each other; and the connecting structure drives the anti-rotation structures between the lower end of the first joint and the upper end of the second joint to be combined with each other during detachable connection. In the invention, with the connecting structure, the first joint and the second joint can abut against each other and are tightly connected, and meanwhile, with the anti-rotation structures, the first main rod and the second main rod being connected do not rotate relative to each other, thereby meeting the requirement on stability of photographic and video shooting equipment, and the anti-rotation structures are driven by the connecting structure during connection, and thus quick and convenient connection can be achieved.

## Description

### Field of the Invention

The invention relates to a connection apparatus, and in particular relates to a quick connection anti-loose apparatus between rods.

### Background of the Invention

In a traditional photographic tripod sold in the market or used in daily life, the locking of primary tube fittings and secondary tube fittings is realized by the locking of joints, lock sleeves, as well as one or more open lock rings therebetween. From the perspective of actual using effect, such a structural configuration is simple, but when a photographic stand is locked for shooting, foot-tube fittings are locked for use, and shock resistance is low, and when the foot-tubes are locked, plastic parts can be jammed in the foot-tubes. As the open lock rings are designed to include a plurality of lock rings without a taper, when a user clears away sand and dust from the photographic foot-tubes, the foot-tubes cannot be installed back, which brings a lot of troubles to the user.

To solve the above problems, Chinese patent document CN201310727Y discloses a locking apparatus for a telescopic foot-tube of a photographic tripod, comprising a primary tube fitting with a joint provided thereon and the primary tube having threads outside; a secondary tube fitting; a lock ring; and a lock sleeve having threads inside, wherein at the upper part of the lock ring is provided an outer conical surface with a tapered opening; at the lower end of the joint is provided an inner conical surface fit to the outer conical surface; the lock ring is provided with a positioning boss; and the lock sleeve is provided with a relief slot. That is, in the locking apparatus for the telescopic foot-tube of the photographic tripod described in the above patent document, the internal threads in the lock sleeve and the external threads of the joint interact with each other by rotating the lock sleeve, so that the lock ring with the tapered opening between the lock sleeve and the joint is pressed, the outer conical surface of the lock ring with the tapered opening and the inner conical surface of the lower end of the joint interfere, the positioning step of the lock ring with the tapered opening is clamped in the relief slot of the lock sleeve, and a bevel of the lower end of the lock ring with the tapered opening and a bevel in the lock sleeve interfere, causing the lock ring with the tapered opening to enclasp the secondary tube fitting, thereby achieving the aim of locking the secondary tube fitting.

However, in the locking apparatus for the telescopic foot-tube of the photographic tripod described in the above patent document, the locking of the primary tube fitting and the secondary tube fitting is realized by pressing the lock ring with the tapered opening so that the outer conical surface of the lock ring with the tapered opening is clamped inside the inner conical surface of the lower end of the joint, but when the locking apparatus is manufactured and assembled, the requirement on coaxiality of the lock ring with the tapered opening and the internal threads of the lock sleeve is high, otherwise threaded locking between the lock sleeve and the joint and insertion between the lock ring and a conical arm in the joint can interfere, so that it is impossible for quick installation, and even impossible for installation.

### Summary of the Invention

To this end, the technical problem to be solved by the invention is that the locking apparatus for the telescopic foot-tube of the photographic tripod in the prior art is unreasonable in structure, and cannot realize quick and reliable connection.In view of the above-described problems, it is one objective of the invention to provide a quick connection anti-loose apparatus which has a reasonable structure and can be used on a photographic stand.

To achieve the above objective, in accordance with one embodiment of the invention, there is provided a quick connection anti-loose apparatus, comprising a first main rod, a second main rod, and a connection anti-loose device, for connecting the first main rod and the second main rod; wherein, the connection anti-loose device comprises a first joint, provided on the first main rod; a second joint, provided on the second main rod; and a connecting structure, slidably sleeved on the first joint and restricted from slipping off from an end of the first joint facing the second joint, or slidably sleeved on second joint and restricted from slipping off from an end of the second joint facing the first joint; and further comprises anti-rotation structures, provided between opposite ends of the first joint and the second joint, and combined with each other to prevent the first joint and the second joint from rotating relative to each other; the connecting structure is adapted for sliding from the first joint or the second joint on which the connecting structure is sleeved to the second joint or the first joint, and driving the first joint or the second joint on which the connecting structure is sleeved to slide during detachable connection with the second joint or the first joint, so as so enable the anti-rotation structures between the opposite ends of the first joint and the second joint to be combined with each other.

In a class of this embodiment, the anti-rotation structure further comprises a clamping head or a clamping slot formed at an end of the first joint, and a clamping slot or a clamping head matched with the clamping head or the clamping slot and formed at an end of the second joint.

In a class of this embodiment, the connection structure is a connecting knob which is sleeved on the first joint; and the connecting knob and the second joint are detachably connected with each other by means of threads.

In a class of this embodiment, the end of the first joint facing the first main rod is pyramidal, provided with a narrower upper part and a wider lower part; a corresponding pyramidal inner cavity is formed at the end of the connecting knob facing the first main rod; an internal thread is formed on the inner wall of the end of the connecting knob facing the second joint; an external thread matched with the internal thread.is formed on an outer wall of the second joint.

In a class of this embodiment, further comprising a joint sheath is sleeved outside the second joint, for preventing the external thread of the second joint from scratching hands.

In a class of this embodiment, the joint sheath is provided with a hollow structure; the end of the joint sheath facing the second main rod is provided with a circumferential inner wall in threaded connection with the second joint provided with a circumferential outer wall; a clearance provided between the circumferential inner wall of the end of the joint sheath facing the first joint and the circumferential outer wall of the second joint is adapted for screwing the end of the connecting knob sleeved on the first joint facing the second joint therein.

In a class of this embodiment, the connection structure is a connecting knob, which is sleeved on the second joint; and the connecting knob and the first joint are detachably connected with each other by means of threads.

In a class of this embodiment, the end of the first joint facing the first joint is pyramidal, provided with a wider upper part and a narrower lower part; a corresponding pyramidal inner cavity is formed at the end of the connecting knob facing the second main rod; an internal thread is formed on the inner wall of the end of the connecting knob facing the first joint, and an external thread matched with the internal thread is formed on the outer wall of the first joint.

In a class of this embodiment, the quick connection anti-loose apparatus further comprises a joint sheath sleeved outside the second joint, for preventing the external thread of the first joint from scratching hands.

In a class of this embodiment, the joint sheath is provided with a hollow structure; the end of the joint sheath facing the first main rod is provided with a circumferential inner wall in threaded connection with the first joint provided with a circumferential outer wall; a clearance provided between the circumferential inner wall of the end of the joint sheath facing the second joint and the circumferential outer wall of the first joint is adapted for screwing the upper end of the connecting knob sleeved on the second joint therein.

In a class of this embodiment, the clamping head is a pyramidal, provided with a wider upper part and a narrower lower part and formed at the end of the first joint facing the second joint; and the clamping slot is a pyramidal inner cavity formed at the end of the second joint facing the first joint.

In a class of this embodiment, the clamping head is a pyramidal, provided with a narrower upper part and a wider lower part and formed at the end of the second joint facing the first joint; and the clamping slot is a pyramidal inner cavity formed at the end of the first joint facing the second joint.

In a class of this embodiment, in the axial direction is in the form of a hexagonal pyramidal boss, and the pyramidal inner cavity is in the form of a corresponding hexagonal pyramidal slot.

In a class of this embodiment, the end of the second joint facing the second main rod is inserted into the second main rod and is in threaded connection with the second main rod; and glue is further applied to surfaces of the second joint and the second main rod fit to each other.

In a class of this embodiment, a stepped hole extending in the axial direction is formed at the end face of the end of the first joint facing the first main rod; one end of the first main rod is inserted into the stepped hole and abuts against a step surface of the stepped hole; an outer wall of an end head of the first main rod is in threaded connection with an inner wall of the first joint by means of threads; and glue is further applied to surfaces of the first main rod and the first joint fit to each other.

Compared with the prior art, the invention has the following advantages:
(1) In the invention, the connection anti-loose device comprises a first joint provided on the first main rod; a second joint provided on the second main rod; and a connecting structure slidably sleeved on the first joint and restricted from slipping off from the end of the first joint facing the second joint, or slidably sleeved on second joint and restricted from slipping off from the end of the second joint facing the first joint; between opposite ends of the first joint and the second joint are provided anti-rotation structures which are combined with each other to prevent the first joint and the second joint from rotating relative to each other; the connecting structure slides from the first joint or the second joint on which the connecting structure is sleeved to the second joint or the first joint, and drives the first joint or the second joint on which the connecting structure is sleeved to slide during detachable connection with the second joint or the first joint, so that the anti-rotation structures between the opposite ends of the first joint and the second joint are combined with each other; that is, in the invention, by providing the connecting structure, the first joint and the second joint abut against each other and are tightly connected together, and meanwhile, by providing the anti-rotation structures, the first main rod and the second main rod being connected do not rotate relative to each other, and thus the connection anti-loose device is reasonable in structure and can realize quick connection.
(2) In the invention, the anti-rotation structure comprises a clamping head or a clamping slot formed at an end of the first joint, and a clamping slot or a clamping head matched with the clamping head or a clamping slot, formed at an end of the second joint; and with the configuration of the clamping head and the clamping slot, not only the first main rod and the second main rod do not rotate relative to each other after being locked, but also the first main rod and the second main rod can be quickly joined during connection to realize quick locking between the first main rod and the second main rod.
(3) In the invention, the connection structure is a connecting knob, which is sleeved on the first joint, and the connecting knob and the second joint are detachably connected with each other by means of threads; that is, in the invention, locking between the first main rod and the second main rod is realized by threaded connection of the connecting knob and the second joint, so the structure is simple, and the locking efficiency is high.
(4) In the invention, the end of the first joint facing the first main rod is pyramidal, provided with a narrower upper part and a wider lower part, and at the end of the connecting knob facing the first main rod is formed a corresponding pyramidal inner cavity; on the inner wall of the end of the connecting knob facing the second joint are formed internal threads, and on the outer wall of the second joint are formed matched external threads; that is, in the invention, as the first joint is configured to be pyramidal, provided with a narrower upper part and a wider lower part, the connecting knob sleeved on the first joint can be prevented from slipping off from the end of the first joint facing the second joint; meanwhile, as the first joint and the connecting knob are fit to each other by pyramidal surfaces, the connecting knob applies to the first joint a certain extrusion force toward the first joint in the screwing process, so that the first joint can tightly abut against the second joint, and relative sliding will not occur after screwing tightly.
(5) In the invention, outside the second joint is also sleeved a joint sheath preventing the external threads of the second joint from scratching hands. The joint sleeve is arranged to prevent the external threads on the second joint that are not connected with the part of the connecting knob from scratching users' hands or other objects during use.
(6) In the invention, the joint sheath is provided with a hollow structure; the circumferential inner wall of the end of the joint sheath facing the second main rod is in threaded connection with the second joint; and the clearance provided between the circumferential inner wall of the end of the joint sheath facing the first joint and the circumferential outer wall of the second joint is adapted to screw the end of the connecting knob sleeved on the first joint facing the second joint therein, so that when the second main rod is detached, the external threads of the second joint can be protected by the joint sheath to avoid damage to the external threads, and meanwhile, the connecting end of the connecting knob is concealed inside, so the structure is compact and the appearance is beautiful.
(7) In the invention, the connection structure is a connecting knob, which is sleeved on the second joint, and the connecting knob and the first joint are detachably connected with each other by means of threads; that is, in the invention, locking between the first main rod and the second main rod is realized by threaded connection of the connecting knob and the first joint, so the structure is simple, and the locking efficiency is high.
(8) In the invention, outside the first joint is also sleeved a joint sheath preventing the external threads of the first joint from scratching hands. The joint sleeve is arranged to prevent the external threads on the first joint that are not connected with the part of the connecting knob from scratching users' hands or other objects during use.
(9) In the invention, the joint sheath is provided with a hollow structure; the circumferential inner wall of the end of the joint sheath facing the first main rod is in threaded connection with the first joint; and the clearance between the circumferential inner wall of the end of the joint sheath facing the second joint and the circumferential outer wall of the first joint is adapted to screw the end of the connecting knob sleeved on the second joint facing the first joint therein, so that when the second main rod is detached, the external threads of the first joint can be protected by the joint sheath to avoid damage to the external threads, and meanwhile, the connecting end of the connecting knob is concealed inside, so the structure is compact and the appearance is beautiful.
(10) In the invention, the clamping head is pyramidal, provided with a wider upper part and a narrower lower part and formed at the end of the first joint facing the second joint, and the clamping slot is a pyramidal inner cavity formed at the end of the second joint facing the second joint. With the polygonal pyramidal configuration, clamping between the clamping head and the clamping slot can be more compact, so that the first joint and the second joint will not rotate relative to each other after the clamping head of the first joint is inserted into the clamping slot of the second joint.
(11) In the invention, the clamping head is pyramidal, provided with a narrower upper part and a wider lower part and formed at the end of the second joint facing the first joint, and the clamping slot is a pyramidal inner cavity formed at the end of the first joint facing the second joint. The clamping head is in the form of a hexagonal pyramidal boss, and the pyramidal inner cavity is in the form of a corresponding hexagonal pyramidal slot; and with the polygonal pyramidal configuration, clamping between the clamping head and the clamping slot can be more compact, so that the first joint and the second joint will not rotate relative to each other after the clamping head of the second joint is inserted into the clamping slot of the first joint.
(12) In the invention, the end of the second joint facing the second main rod is inserted into the second main rod and is in threaded connection with the second main rod; and glue is further applied to surfaces of the second joint and the second main rod fit to each other, so that the second joint can be tightly connected to a ball joint without relative rotation.
(13) In the invention, on the second joint is also formed a connecting construction adapted for connecting an adapting platform; the connecting construction is a threaded central hole formed at the end of the second joint facing the second main rod and adapted for being connected with the adapting platform, and the threaded central hole is communicated with the pyramidal inner cavity, so that the second joint can be connected with an adapting screw of the adapting platform through the threaded central hole, so that the stand can be transformed to a new stand after the adapting platform is connected to the detached second main rod.
(14) In the invention, on the end face of the end of the first joint facing the first main rod is formed a stepped hole extending in the axial direction, and one end of the first main rod is inserted into the stepped hole and abuts against a step surface of the stepped hole; the outer wall of an end head of the first main rod is in threaded connection with the inner wall of the first joint by means of threads; and glue is further applied to surfaces of the first main rod and the first joint fit to each other, so that the first joint and the main rod can be connected firmly without falling off.
(15) In the invention, the end of the connecting knob facing the second main rod is adapted for being connected with a foot pin, so that when the first main rod is detached, the foot pin can be connected to the lower end of the first main rod through the connecting knob, so that the first main rod is transformed to an ordinary unipod.

### Brief Description of the Drawings

In order that the content of the invention is more readily understood clearly, the invention will be further described in detail according to particular embodiments of the invention in conjunction with the accompanying drawings, in which
Fig. 1 is an assembly schematic view of a quick connection anti-loose apparatus of embodiment 1;
Fig. 2 is a schematic view of the quick connection anti-loose apparatus of embodiment 1;
Fig. 3 is a schematic view of a detached first main rod of embodiment 1;
Fig. 4 is a schematic view of a detached second main rod of embodiment 1; and
Fig. 5 is a schematic view of a quick connection anti-loose apparatus of embodiment 2;

Reference numerals in the figures are as follows: 1 - first main rod; 11 - first joint; 111 - clamping head; 112 - stepped hole; 12 - connecting knob; 121 - pyramidal inner cavity; 122 - internal threads; 3 - second main rod; 31 - second joint; 32 - connecting construction; 311 - external threads; 312 - clamping slot; 4 - joint sheath.

### Detailed Description of the Embodiments

The invention will be further discussed below using the following embodiments in conjunction with the drawings.

### Embodiment 1

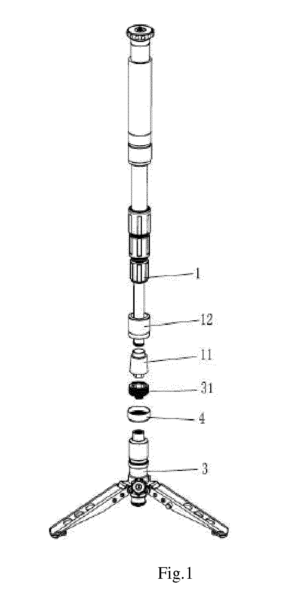

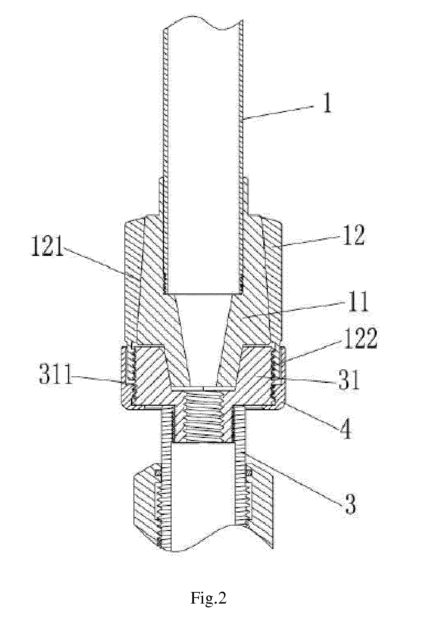

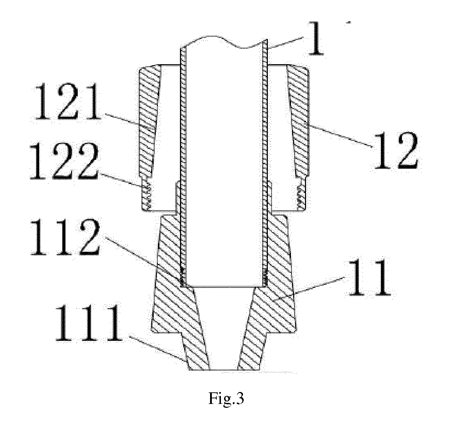

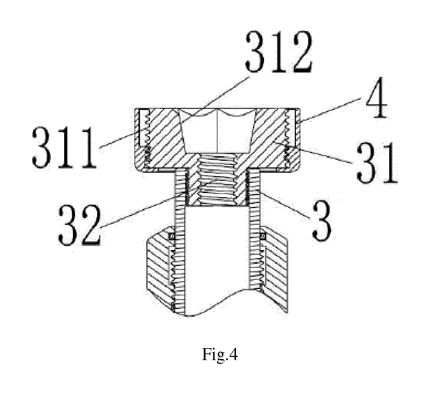

As shown in Figs. 1-4, a quick connection anti-loose apparatus of the embodiment comprises a first main rod 1, a second main rod 3, and a connection anti-loose device for connecting the first main rod 1 and the second main rod 3, the connection anti-loose device comprises a first joint 11 provided on the first main rod 1; a second joint 31 provided on the second main rod 3; and a connecting structure 12 slidably sleeved on the first joint 11 and restricted from slipping off from the end of the first joint 11 facing the second joint 31; between opposite ends of the first joint 11 and the second joint 31 are provided anti-rotation structures which are combined with each other to prevent the first joint 11 and the second joint 31 from rotating relative to each other; the connecting structure 12 is adapted for sliding from the first joint 11 on which the connecting structure is sleeved to the second joint 31, and driving the first joint 11 on which the connecting structure is sleeved to slide during detachable connection with the second joint 31, so as to enable the anti-rotation structures between the opposite ends of the first joint 11 and the second joint 31 to be combined with each other. In the invention, by providing the connecting structure, the first joint 11 and the second joint 31 abut against each other and are tightly connected together, and meanwhile, by providing the anti-rotation structures, the first main rod 1 and the second main rod 3 being connected cannot rotate relative to each other, thereby meeting the requirement on stability by photographic and video shooting equipment, and more importantly, the anti-rotation structures of the invention are driven by the connecting structure during connection, and thus quick and convenient connection can be achieved. Preferably, the connecting structure is a connecting knob 12, which is sleeved on the first joint 11; the end of the first joint 11 facing the first main rod 1 is pyramidal, provided with a narrower upper part and a wider lower part, and at the end of the connecting knob 12 facing the first main rod 1 is formed a corresponding pyramidal inner cavity 121; and on the inner wall of the end of the connecting knob 12 facing the second main rod 3 are formed an internal thread 122, and on the outer wall of the second joint 31 are formed an external thread 311 matched with the internal thread. Locking between the first main rod 1 and the second main rod 3 is achieved by threaded connection of the connecting knob 12 and the second joint 31, so the structure is simple, and the locking efficiency is high. In the embodiment, as the first joint 11 is configured to be pyramidal, provided with a narrower upper part and a wider lower part, the connecting knob 12 sleeved on the first joint 11 can be prevented from slipping off from the end of the first joint 11 facing the second joint 31; meanwhile, as the first joint 11 and the connecting knob 12 are fit to each other by pyramidal surfaces, the connecting knob 12 applies to the first joint 11 a certain extrusion force toward the second joint 31 in the screwing process, so that the first joint 11 can tightly abut against the second joint 31, and relative sliding will not occur after screwing tightly.

In the embodiment, the anti-rotation structures comprise a clamping head 111 formed at an end of the first joint 11, and a clamping slot 312 matched with the clamping head 111 and formed at an end of the second joint 31; and with the configuration of the clamping head 111 and the clamping slot 312, not only the first main rod 1 and the second main rod 3 do not rotate relative to each other after being locked, but also the first main rod 1 and the second main rod 3 can be quickly joined during connection to achieve quick locking between the first main rod 1 and the second main rod 3. As a preferred embodiment, in the embodiment, the clamping head 111 is pyramidal, provided with a wider upper part and a narrower lower part and formed at the end of the first joint 11 facing the second joint 31, and the clamping slot 312 is a pyramidal inner cavity formed at the end of the second joint 31 facing the first joint 11. Further preferably, the clamping head is in the form of a hexagonal pyramidal boss, and the pyramidal inner cavity is in the form of a corresponding hexagonal pyramidal slot; and with the polygonal pyramidal configuration, clamping between the clamping head 111 and the clamping slot 312 can be more compact, so that the first joint 11 and the second joint 31 will not rotate relative to each other after the clamping head 111 of the first joint 11 is inserted into the clamping slot 312 of the second joint 31.

Further, in the embodiment, the end of the second joint 31 facing the second main rod 3 is inserted into the second main rod 3 and is in threaded connection with the second main rod 3. Glue is further applied to positions of the second joint 31 and the second main rod 3 fit to each other, so that the second joint 31 can be tightly connected to a ball joint without relative rotation. Based on the above embodiment, on the end face of the end of the first joint 11 facing the first main rod 1 is formed a stepped hole 112 extending in the axial direction, and one end of the first main rod 1 is inserted into the stepped hole 112 and abuts against a step surface of the stepped hole 112; the outer wall of an end head of the first main rod 1 is in threaded connection with the inner wall of the first joint 11 by means of threads; and glue is further applied to surfaces of the first main rod 1 and the first joint 11 fit to each other, so that the first joint 11 and the main rod can be connected firmly without falling off.

In the embodiment, outside the second joint 31 is also sleeved a joint sheath 4 preventing the external threads 311 of the second joint 31 from scratching hands. The joint sleeve 4 is arranged to prevent the external threads 311 on the second joint 31 that are not connected with the part of the connecting knob 12 from scratching users' hands or other objects during use. As a preferred embodiment, the joint sheath is provided with a hollow structure; the circumferential inner wall of the end of the joint sheath 4 facing the second main rod 3 is in threaded connection with the second joint 31; the clearance between the circumferential inner wall of the end of the joint sheath 4 facing the first main rod 1 and the circumferential outer wall of the second joint 31 is adapted to screw the end of the connecting knob 12 facing the second main rod 3 therein; and when the second main rod 3 is detached, the external threads 311 of the second joint 31 can be protected by the joint sheath 4 to avoid damage to the external threads 311.

### Embodiment 2

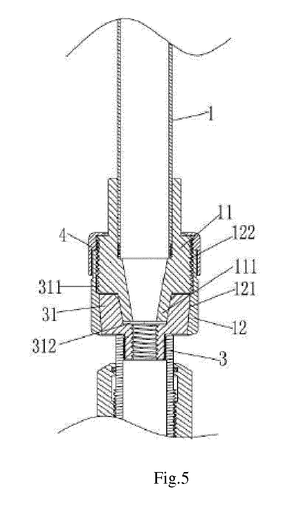

As shown in Fig. 5, this embodiment differs from embodiment 1 in that the connecting structure is arranged on the second joint 31, so connection relation of components can be changed, specifically: the connecting structure is slidably sleeved on the second joint 31 and restricted from slipping off from the end of the second joint 31 facing the first joint 11; the connecting structure 12 is adapted for sliding from the second joint 31 on which the connecting structure is sleeved to the second joint 31, and driving the second joint 31 on which the connecting structure is sleeved to slide during detachable connection with the first joint 11, so that the anti-rotation structures between the opposite ends of the first joint 11 and the second joint 31 are combined with each other.

In the embodiment, preferably the connecting structure is a connecting knob 12; the end of the second joint 31 facing the second main rod 3 is pyramidal, provided with a wider upper part and a narrower lower part, and at the end of the connecting knob 12 facing the second main rod 3 is formed a corresponding pyramidal inner cavity 121; and on the inner wall of the end of the connecting knob 12 facing the first main rod 1 are formed an internal thread 122, and on the outer wall of the first joint 11 is formed an external thread 311 matched with the internal thread. The locking between the first main rod 1 and the second main rod 3 is realized by threaded connection of the connecting knob 12 and the first joint 11, so the structure is simple, and the locking efficiency is high.

Further, in the embodiment, the anti-rotation structures are configured to be the same as embodiment 1. Alternatively, the anti-rotation structures may also be configured to be different from embodiment 1, specifically: the clamping head 111 in the anti-rotation structures is pyramidal, provided with a narrower upper part and a wider lower part and formed at the end of the second joint 31 facing the first main rod 1, and the clamping slot 312 is a pyramidal inner cavity formed at the end of the first joint 11 facing the second main rod 3.

To adapt to the structural change that the connecting structure is provided on the second joint 31, the joint sheath 4 is sleeved outside the first joint 11 to prevent the external threads 311 of the first joint 11 from scraping hands.

In the embodiment, preferably the structure of the joint sheath is as follows: the joint sheath provided with a hollow structure; the circumferential inner wall at the upper end of the joint sheath 4 is in threaded connection with the first joint 11; and the clearance between the circumferential inner wall at the end of the joint sheath 4 facing the first second joint 31 and the circumferential outer wall of the second joint 31 is adapted for screwing the end of the connecting knob 12 sleeved on the second joint 31 facing the first joint 11 therein. The joint sheath with such a structure not only can prevent the external threads of the joint from scratching hands, but also can conceal the connecting end of the connecting knob, so the structure is compact and the appearance is beautiful.

### Embodiment 3

As shown in Fig. 1, application of the quick connection anti-loose apparatus of the invention to a unipod is introduced in the embodiment. In this case the first main rod 1 is a main rod of a unipod; and the second main rod 3 is a supporting seat of the unipod, and is usually a tripod supporting seat with short supporting legs. The main rod and the tripod supporting seat are detachably connected with each other through a first joint 11, a second joint and a connecting knob 12. When the main rod and the tripod supporting seat are connected into a whole, a high-angle shooting unipod is formed, and when the main rod and the tripod supporting seat are detached from each other, the lower end of the connecting knob 12 at the lower end of the main rod is adapted to be connected with a foot pin, and an ordinary unipod is formed. On the second joint 31 of the tripod supporting seat is also formed a connecting construction 32 adapted to connect an adapting platform. After the adapting platform is connected to the tripod supporting seat by the connecting construction 32, a low-angle shooting tripod is formed. In the embodiment, the connecting construction 32 is a threaded central hole formed at the lower end of the second joint 31 and adapted to be connected with the adapting platform, and the threaded central hole is communicated with the pyramidal inner cavity.

It is apparent that the above embodiments are only examples for the sake of clear description, instead of limiting the implementing ways. To those of ordinary skills in the relevant art, other modifications or alterations in various forms can also be made based on the above description. It does not need nor is it possible to give all implementing ways herein in an exhaustive manner. Obvious modifications or alternations derived therefrom are still in the protection scope of the invention creation.

## Claims

1. A quick connection anti-loose apparatus, comprising
a first main rod (1),
a second main rod (3), and
a connection anti-loose device, for connecting the first main rod (1) and the second main rod (3);
wherein, the connection anti-loose device comprises
a first joint (11), provided on the first main rod (1);
a second joint (31), provided on the second main rod (3); and
a connecting structure, slidably sleeved on the first joint (11) and restricted from slipping off from an end of the first joint (11) facing the second joint (31), or slidably sleeved on second joint (31) and restricted from slipping off from an end of the second joint (31) facing the first joint (11); and
further comprises anti-rotation structures, provided between opposite ends of the first joint (11) and the second joint (31), and combined with each other to prevent the first joint (11) and the second joint (31) from rotating relative to each other;
the connecting structure is adapted for sliding from the first joint (11) or the second joint (31) on which the connecting structure is sleeved to the second joint (31) or the first joint (11), and driving the first joint (11) or the second joint (31) on which the connecting structure is sleeved to slide during detachable connection with the second joint (31) or the first joint (11), so as so enable the anti-rotation structures between the opposite ends of the first joint (11) and the second joint (31) to be combined with each other.

2. The quick connection anti-loose apparatus of claim 1, wherein, the anti-rotation structure further comprises a clamping head (111) or a clamping slot (312) formed at an end of the first joint (11), and a clamping slot (312) or a clamping head (111) matched with the clamping head (111) or the clamping slot (312) and formed at an end of the second joint (31).

3. The quick connection anti-loose apparatus of claims 1 or 2, wherein, the connection structure is a connecting knob (12) which is sleeved on the first joint (11); and the connecting knob (12) and the second joint (31) are detachably connected with each other by means of threads.

4. The quick connection anti-loose apparatus of claim 3, wherein,
the end of the first joint (11) facing the first main rod (1) is pyramidal, provided with a narrower upper part and a wider lower part;
a corresponding pyramidal inner cavity (121) is formed at the end of the connecting knob (12) facing the first main rod (1);
an internal thread (122) is formed on the inner wall of the end of the connecting knob (12) facing the second joint (31);
an external thread (311) matched with the internal thread (122).is formed on an outer wall of the second joint (31).

5. The quick connection anti-loose apparatus of claim 4, wherein, further comprising
a joint sheath (4) is sleeved outside the second joint (31), for preventing the external thread (311) of the second joint (31) from scratching hands.

6. The quick connection anti-loose apparatus of claim 5, wherein,
the joint sheath is provided with a hollow structure;
the end of the joint sheath (4) facing the second main rod (3) is provided with a circumferential inner wall in threaded connection with the second joint (31) provided with a circumferential outer wall;
a clearance provided between the circumferential inner wall of the end of the joint sheath (4) facing the first joint (11) and the circumferential outer wall of the second joint (31) is adapted for screwing the end of the connecting knob (12) sleeved on the first joint (11) facing the second joint (31) therein.

7. The quick connection anti-loose apparatus of claim 1 or 2, wherein,
the connection structure is a connecting knob (12), which is sleeved on the second joint (31); and
the connecting knob (12) and the first joint (11) are detachably connected with each other by means of threads.

8. The quick connection anti-loose apparatus of claim 7, wherein,
the end of the first joint (31) facing the first joint (11) is pyramidal, provided with a wider upper part and a narrower lower part;
a corresponding pyramidal inner cavity (121) is formed at the end of the connecting knob (12) facing the second main rod (3);
an internal thread (122) is formed on the inner wall of the end of the connecting knob (12) facing the first joint (11), and
an external thread (311) matched with the internal thread (122) is formed on the outer wall of the first joint (11).

9. The quick connection anti-loose apparatus of claim 8, wherein, further comprising
a joint sheath (4) is sleeved outside the second joint (11), for preventing the external thread (311) of the first joint (11) from scratching hands.

10. The quick connection anti-loose apparatus of claim 9, wherein,
the joint sheath is provided with a hollow structure;
the end of the joint sheath (4) facing the first main rod (1) is provided with a circumferential inner wall in threaded connection with the first joint (11) provided with a circumferential outer wall;
a clearance provided between the circumferential inner wall of the end of the joint sheath (4) facing the second joint (31) and the circumferential outer wall of the first joint (11) is adapted for screwing the upper end of the connecting knob (12) sleeved on the second joint (31) therein.

11. The quick connection anti-loose apparatus of any of claims 2-10, wherein,
the clamping head (111) is a pyramidal, provided with a wider upper part and a narrower lower part and formed at the end of the first joint (11) facing the second joint (31); and
the clamping slot (312) is a pyramidal inner cavity formed at the end of the second joint (31) facing the first joint (11).

12. The quick connection anti-loose apparatus of any of claims 2-10, wherein,
the clamping head (111) is a pyramidal, provided with a narrower upper part and a wider lower part and formed at the end of the second joint (31) facing the first joint (11); and
the clamping slot (312) is a pyramidal inner cavity formed at the end of the first joint (11) facing the second joint (31).

13. The quick connection anti-loose apparatus of claim 11 or 12, wherein,
the clamping head is in the form of a hexagonal pyramidal boss, and the pyramidal inner cavity is in the form of a corresponding hexagonal pyramidal slot.

14. The quick connection anti-loose apparatus of any of claims 1-13, wherein,
the end of the second joint (31) facing the second main rod (3) is inserted into the second main rod (3) and is in threaded connection with the second main rod (3); and glue is further applied to surfaces of the second joint (31) and the second main rod (3) fit to each other.

15. The quick connection anti-loose apparatus of any of claims 1-14, wherein,
a stepped hole (112) extending in the axial direction is formed at the end face of the end of the first joint (11) facing the first main rod (1);
one end of the first main rod (1) is inserted into the stepped hole (112) and abuts against a step surface of the stepped hole (112);
an outer wall of an end head of the first main rod (1) is in threaded connection with an inner wall of the first joint (11) by means of threads; and glue is further applied to surfaces of the first main rod (1) and the first joint (11) fit to each other.
